# EUROPEAN PATENT APPLICATION

(11) **EP 2 323 025 A2**
(43) Date of publication of application: **18.05.2011**
(21) Application number: 10004147.4
(22) Date of filing: 19.04.2010
(51) Int. Cl.: G06F 3/045

(54) **Flat-surface resistive touch panel**

(30) Priority: 17.11.2009 TW 98138952
(71) Applicant: ETURBOTOUCH TECHNOLOGY INC., Taoyuan County (TW)
(72) Inventor: Wang, Kuei-Ching, Jhongli City Taoyuan County (TW); Lin, Hsing-Chiao, Jhongli City Taoyuan County (TW)
(74) Representative: Schaeberle, Steffen

(57) **Abstract**

A flat-surface resistive touch panel (20) includes a resistive touch module (26) and a decoration film (21). The resistive touch module (26) is installed in a frame (28), for detecting the input signals of the multiple touches. The decoration film (21) is fixed on the resistive touch module (26) with an optical adhesive (25) and forms a flat surface with the frame (28). The resistive touch module (26) utilizes the electric potential lines to replace the patterned electrodes so as to increase the durability of the resistive touch panel.

## Description

The present invention relates to a flat-surface resistive touch panel according to the pre-characterizing clause of claim 1.

Touch devices includes projected capacitive touch devices and passive matrix resistive touch devices. The projected capacitive touch devices cannot operate when the user wearing the gloves. The passive matrix resistive touch device includes a top and a bottom substrate. In general, the top substrate is an indium tin oxide (ITO) film, and the bottom substrate is an ITO glass. Two substrates are patterned with the strips of electrodes and separated by a dot spacer. The electrodes of the top,and bottom substrates form a matrix. When an external force from an input point is applied to the top substrate, the electrodes of the top and bottom substrates are contacted forming a short circuit so as to generate a digital signal. Thus, the position of the input point can be calculated according to the digital signal.

The yield of the fabrication of the touch panel is related to the uniformity of the transparent conductive material of the top and the bottom conductive layers. However, after the transparent conducting material is coated, the processes of printing wire, applying adhesive, and laminating the flexible printed circuit board have to be executed on the wiring area of the touch panel. Therefore, the thickness of the precisely coated transparent conducting material is changed so that the flatness of the top conductive layer and the bottom conductive layers is affected, causing the roughness of the touch panel. In addition, since the flexible printed circuit board is disposed between the top and the bottom conductive layers, the conductive wires formed on the flexible printed circuit board affect the flatness of the touch panel as well. However, the conductive wires are essential components of the resistive touch panel. As a result, it cannot be avoided that the flatness of the touch panel is affected.

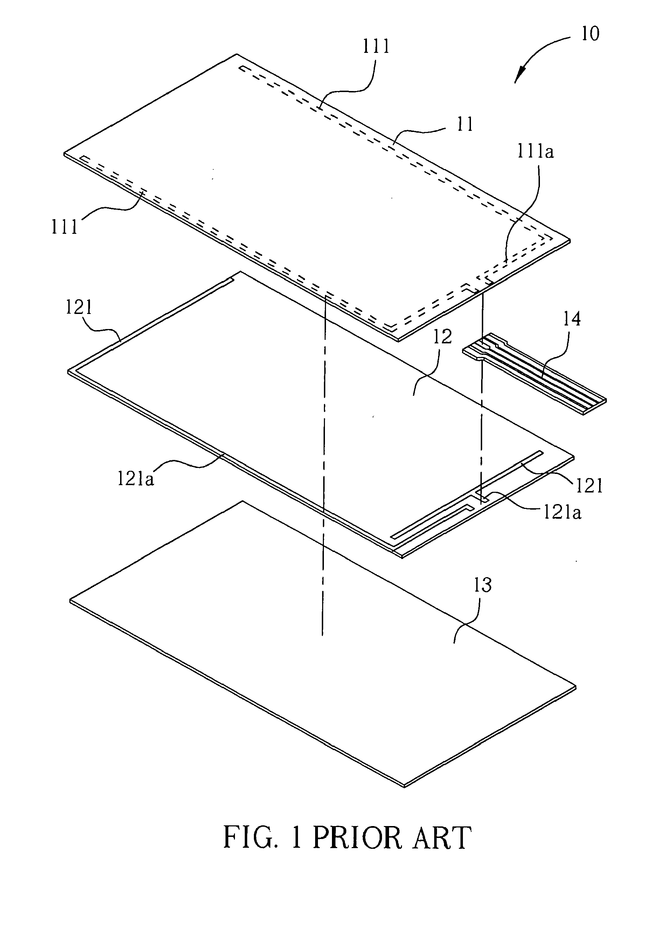

Please refer to FIG. 1. FIG. 1 is a diagram illustrating a conventional resistive touch panel 10. The touch panel 10 comprises a top conductive layer 11, a bottom conductive layer 12, and a substrate 13. The touch panel 10 is a 4-wire resistive touch panel. The X conductive wire 111 is formed on the two opposite sides of the top conductive layer 11. The Y conductive wire 121 is formed on the other two opposite sides (corresponding to the two opposite sides of the top layer 11) of the bottom layer 12. The X. conductive wire 111 and the Y conductive wire 121 are respectively extended by the pilot wires 111 1 a and 11 12a to the same side. The internal area surrounded by the X conductive wire 111 and the Y conductive wire 121 is the touch-operation region of the touch panel. When the touch panel 10 is assembled, at first, the bottom conductive layer 12 is disposed on the substrate 13, and then the circumference of the top conductive layer 11 is bonded to the bottom conductive layer 12 by the adhesive. The top conductive layer 11 and the bottom conductive layer 12 are separated by the printing spacer. In this way, the touch panel 10 is formed. In addition, a flexible printed circuit board 80 is disposed between the top conductive layer 11 and the bottom conductive layer 121. The plurality of the conductive parts on the flexible printed circuit board 80 contacts with the ends of the pilot lines 111 a and 112a so as to form the electrical connection.

When the touch panel is to be designed in a specific shape, the shape of each layer has to be changed. In the various electronic devices, the touch panel is installed in a frame. Generally, the frame is higher than the touch panel so that the circumference of the touch panel cannot be extended to the outside flatly. Hence, touch-operation on the edge of the touch panel is not convenient. When the small-size touch panel is used, the user usually touches the panel through a touch pen. Therefore, the raised frame does not cause an inconvenience for touch-operation. However, when the large-size touch panel is used, the user usually touches the panel through his finger. Consequently, the raised frame causes an inconvenience for touch-operation on the edge of the touch panel.

This in mind, the present invention aims at providing a flat-surface resistive touch panel for overcoming these problems.

This is achieved by a flat-surface resistive touch panel according to claim 1. The dependent claims pertain to corresponding further developments and improvements.

As will be seen more clearly from the detailed description following below, the claimed flat-surface resistive touch panel includes a decoration film fixed on a resistive touch module with an optical adhesive, the decoration film forming a flat surface with a frame.

In the following, the invention is further illustrated by way of example, taking reference to the accompanying drawings. Thereof FIG. 1 is a diagram illustrating a conventional resistive touch panel.
FIG. 2 is a diagram illustrating a flat-surface resistive touch panel of the present invention.
FIG. 3 is a diagram illustrating a resistive touch module according to a first embodiment of the present invention.
FIG. 4 is a diagram illustrating a driving circuit of the resistive touch module of FIG. 3.
FIG. 5 is a diagram illustrating a resistive touch module according to a second embodiment of the present invention.
FIG. 6 is a diagram illustrating a driving circuit of the resistive touch module of FIG. 5.

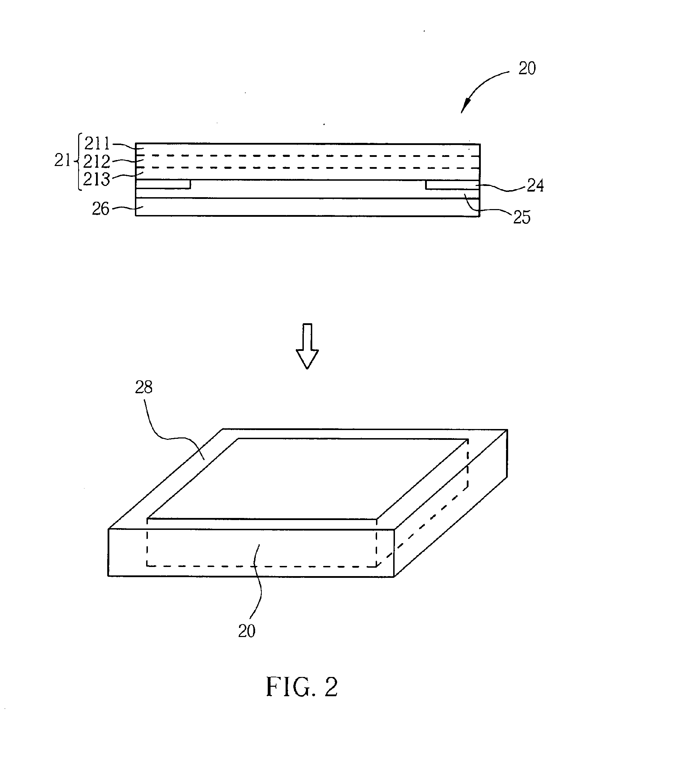

Please refer to FIG. 2. FIG. 2 is a diagram illustrating a flat-surface resistive touch panel 20 of the present invention. The flat-surface resistive touch panel 20 comprises a resistive touch module 26 and a decoration film 21. The resistive touch module 26 is installed in a frame 28. The frame 28 is an opaque material. The decoration film 21 comprises a top surface 211, a base material 212, and a bottom surface 213. The top surface 211 of the decoration film 21 is made of the transparent acrylics or the material of epoxy resin. The top surface 211 of the decoration film 21 forms a flat surface with the frame 28. The base material 212 of the decoration film 21 is made of the material of poly carbonate (PC), arton, polyether surlfone (PES), zeonor, tri-acetyl Cellulose (TAC), polyethylene terephthalate (PET), or polymethyl methacrylate (PMMA). The bottom surface 213 of the decoration film 21 is made of the transparent acrylics or the material of epoxy resin. The bottom surface 213 of the decoration film 21 is bonded with the resistive touch module 26 by an optical adhesive 25. The bottom surface 213 of the decoration film 21 has a decoration pattern 24. The decoration pattern 24 is formed by means of dip coating, gravure/relief coating, sputtering, thermal evaporation, chemical vapor deposition, screen printing, or pad printing. The decoration pattern 24 can be a color pattern. Generally speaking, since the frame is higher than the touch panel, the circumference of the conventional touch panel cannot be extended to the outside flatly, touch-operation on the edge of the conventional touch panel is not convenient. Comparing with the conventional touch panel, the resistive touch panel 20 of the present invention is a flat-surface resistive touch panel by means of the decoration film 21 forming a flat surface with the frame 28. Therefore, touch-operation on the edge of the touch panel 20 of the present invention is easy for the user. In addition, the resistive touch module 26 of the present invention can be utilized for detecting the input signals of the multiple touches. The top and bottom two substrates of the resistive touch module 26 usually have to be patterned for forming the electrodes. However, after the hitting test, the patterned substrates easily have the peel problem, so that the two substrates cannot conduct well, causing the touch resistive module 26 cannot correctly determine the position of the input point. Consequently, the resistive touch module 26 generates the electric potential lines by means of inputting voltage to replace the patterned electrodes, increasing the durability of the resistive touch panel 20.

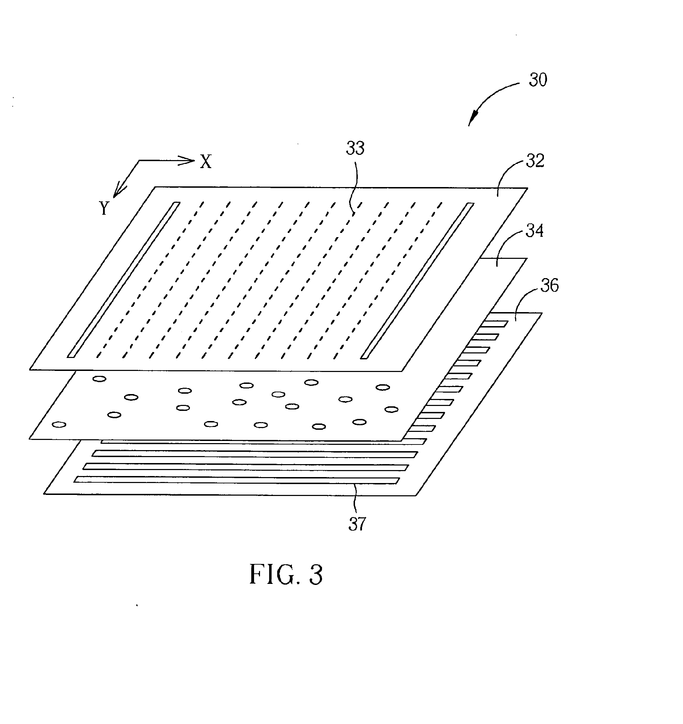

Please refer to FIG. 3. FIG. 3 is a diagram illustrating a resistive touch module 30 according to a first embodiment of the present invention. The touch module 30 comprises a first substrate 32, a spacer layer 34, and a second substrate 36. The first substrate 32 is utilized for detecting the position of an input point in X direction. The second substrate 36 is utilized for detecting the position of the input point in Y direction. In the present embodiment, the first substrate 32 is an indium tin oxide (ITO) film. The spacer layer 34 is a dot spacer. The second substrate is an ITO glass. The first substrate 32 has a conductive layer and does not have to be patterned for forming electrodes. The second substrate 36 has a plurality of electrodes 37. The spacer layer 34 is between the first substrate 32 and the second substrate 36 for separating the conductive layer of the first substrate 32 from the plurality of the electrodes 37 of the second substrate 36. The plurality of the electrodes 37 of the second substrate 36 is formed by means of the fabrication of photolithography, ITO etching, and anti-etching paint. In addition, in addition to ITO, the conductive layer can use the material such as Indium-Zinc-Oxide (IZO), Aluminum-Zinc-Oxide (AZO), or the organic films. Since the first substrate 32 does not have to be patterned for forming electrodes, the first substrate 32 has a better durability than the patterned substrate. The first substrate 32 has a voltage difference in X direction. As a result, electric potential lines 33 are generated in X direction. When two substrates are contacted, the X coordinate value of the input point can be calculated according to the voltage difference of the electric potential lines 33. The plurality of the electrodes 37 of the second substrate 36 has a common voltage. When two substrates are contacted, the Y coordinate value of the input point can be calculated according to the voltage difference of the electrodes 37. In the first embodiment of the present invention, the touch module 30 only has to be patterned on the second substrate 36 for forming the electrodes 37. The first substrate 32 does not have to be patterned for forming the electrodes. More particularly, the first substrate 32 is applied to electric voltages to generate electric potential lines 33 instead of patterned electrodes. Thus, the fabrication of the touch module 30 becomes simpler. In addition, if the first substrate 32 is utilized as the input panel, the touch panel 30 can have higher reliability of the hitting test.

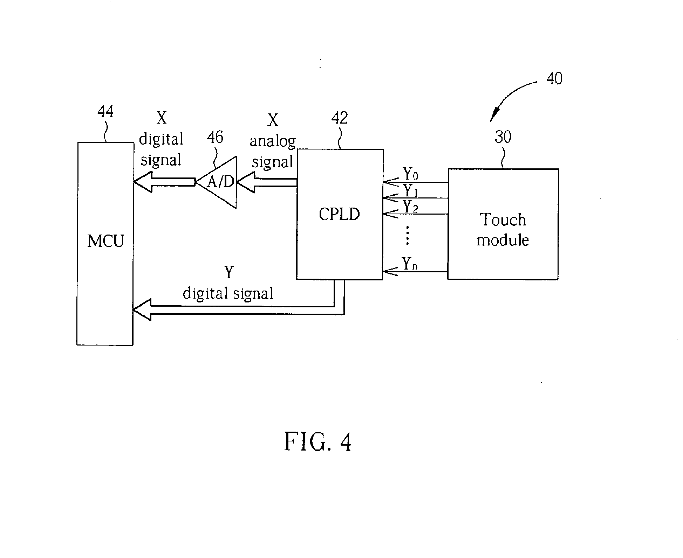

Please refer to FIG. 4. FIG. 4 is a diagram illustrating a driving circuit of the resistive touch module 30 of FIG. 3. The driving circuit of the resistive touch module 30 comprises a complex programmable logic device (CPLD) 42, an analog-to-digital converter (A/D) 46, and a micro controller unit (MCU) 44. The CPLD 42 is utilized for processing the short-circuited voltage between the plurality of the electrodes 37 of the second substrate 36 and the conductive layer of the first substrate 32 for generating the X analog signals. In addition, the CPLD 42 has the function of multiplexer for directly transmitting the Y analog signals to the MCU 44. The A/D 46 is utilized for converting the X analog signals into the X digital signals. The touch panel 30 scans repeatedly the plurality of electrodes 37 on the second substrate 36 when detecting an input point. The Y digital signals can be directly obtained from the plurality of the electrodes 37. The X analog signals can be obtained by the CPLD 42 according to the voltage difference of the electric potential lines 33. The X analog signals are converted into the X digital signals by the A/D 46. Finally, the MCU 44 generates the coordinate values (X,Y) of the input point according to the X digital signals and the Y digital signals.

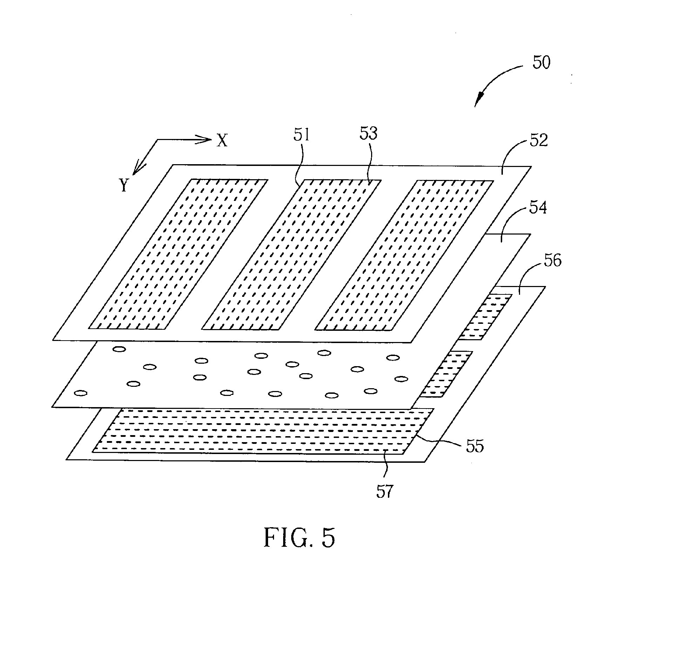

Please refer to FIG. 5. FIG. 5 is a diagram illustrating a resistive touch module 50 according to a second embodiment of the present invention. The touch module 50 comprises a first substrate 52, a spacer layer 54, and a second substrate 56. The first substrate 52 is utilized for detecting the position of an input point in X direction. The second substrate 56 is utilized for detecting the position of the input point in Y direction. A plurality of first electrodes 51 is formed on the first substrate 52. The plurality of the first electrodes 51 has a first voltage difference in X direction. Therefore, electric potential lines 53 are generated in X direction. A plurality of second electrodes 55 is formed on the second substrate 56. The plurality of the second electrodes 55 has a second voltage difference in Y direction. Therefore, electric potential lines 57 are generated in Y direction. The spacer layer 54 is between the first substrate 52 and the second substrate 56 for separating the plurality of the first electrodes 51 from the plurality of the second electrodes 55. The plurality of the first electrodes 51 and the plurality of the second electrodes 55 require the enough width for generating the electric potential lines 53 and 55. When two substrates are contacted, the X and Y coordinate values of the input point can be calculated according to the voltage difference between the first electrodes 51 and the second electrodes 55. In the second embodiment of the present invention, the touch panel 50 has first electrodes 51 and the second electrodes 55 on the first substrate 52 and the second substrate 56 respectively, but the first electrodes 51 and the second electrodes 55 have a large width and a small amount. Thus, the fabrication of the touch panel 50 becomes simpler.

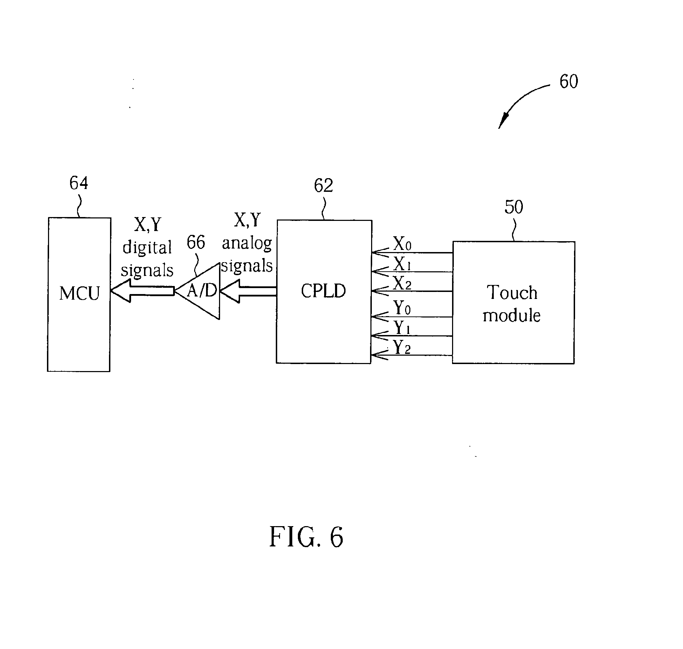

Please refer to FIG. 6. FIG. 6 is a diagram illustrating a driving circuit of the resistive touch module 50 of FIG. 5. The driving circuit of the resistive touch module 50 comprises a CPLD 62, an A/D 66, and a MCU 64. The CPLD 62 is utilized for processing the short-circuited voltage between the plurality of the first electrodes 51 and the plurality of the second electrodes 55 for generating the X analog signals and the Y analog signals. The A/D 66 is utilized for converting the X analog signals into the X digital signals, and converting the Y analog signals into the Y digital signals. The touch panel 50 scans repeatedly the plurality of first electrodes 51 on the first substrate 52 or the plurality of second electrodes 55 on the first substrate 56 when detecting an input point. The CPLD 62 obtains the X analog signals and the Y analog signals according to the voltage difference of the electric potential lines 53 of the first electrodes 51 and the electric potential lines 57 of the second electrodes 55. The X analog signals and the Y analog signals are converted into the X digital signals and the Y digital signals by the A/D 66. Finally, the MCU 64 generates the coordinate values (X,Y) of the input point according to the X digital signals and the Y digital signals.

In conclusion, the flat-surface resistive touch panel of the present invention includes a resistive touch module and a decoration film. The resistive touch module is installed in a frame, for detecting the input signals of the multiple touches. The decoration film is fixed on the resistive touch module with an optical adhesive and forms a flat surface with the frame. Consequently, it is convenient for user to touch the circumference of the touch panel. In addition, the resistive touch module generates the electric potential lines by means of inputting voltage to replace the patterned electrodes, increasing the durability of the resistive touch panel.

For completeness, various aspects of the invention are set out in the following numbered clauses:
Clause 1: A flat-surface resistive touch panel, comprising:
   a resistive touch module, installed in a frame, for detecting input
      signals of multiple touches; and
   a decoration film, fixed on the resistive touch module with an
      optical adhesive, the decoration film forming a flat surface with the frame.
Clause 2: The resistive touch panel of claim 1, wherein the resistive touch module comprises:
   a first substrate, for detecting position of an input point in a first direction;
   a conductive layer, formed on the first substrate, the conductive layer having a voltage difference in the first direction;
   a second substrate, for detecting position of the input point in a second direction;
   a plurality of electrodes, formed on the second substrate, the plurality of the electrodes being perpendicular to the second direction; and
   a spacer layer, disposed between the first substrate and the second substrate, for separating the conductive layer from the plurality of the electrodes.
Clause 3: The resistive touch panel of claim 2, wherein the resistive touch module further comprises:
   a complex programmable logic device (CPLD), for processing short-circuited voltage between the conductive layer and the plurality of the electrodes for generating analog signals of the first direction and digital signals of the second direction;
   an analog-to-digital converter (A/D), for converting the analog signals of the first direction into digital signals of the first direction; and
   a micro controller unit (MCU), for generating coordinate values of the input point according to the digital signals of the first
   direction and the digital signals of the second direction.
Clause 4: The resistive touch panel of claim 1, wherein the resistive touch module comprises:
   a first substrate, for detecting position of an input point in a first direction;
   a plurality of first electrodes, formed on the first substrate, the plurality of the first electrodes having a first voltage difference in the first direction;
   a second substrate, for detecting position of the input point in a second direction;
   a plurality of second electrodes, formed on the second substrate, the plurality of the electrodes having a second voltage difference in the second direction; and
   a spacer layer, disposed between the first substrate and the second substrate, for separating the plurality of the first electrodes from the plurality of the second electrodes.
   Clause 5: The resistive touch panel of claim 4, wherein the resistive touch module further comprises:
      a complex programmable logic device (CPLD), for processing short-circuited voltage between the plurality of the first electrodes and the plurality of the second electrodes for generating analog signals of the first direction and analog signals of the second direction;
      an analog-to-digital converter (A/D), for converting the analog signals of the first direction and the analog signals of the second direction into digital signals of the first direction and digital signals of the second direction; and
      a micro controller unit (MCU), for generating coordinate values of the input point according to the digital signals of the first direction and the digital signals of the second direction.
Clause 6: The resistive touch panel of claim 1, wherein the decoration film comprises:
   a top surface, forming the flat surface with the frame;
   a base material; and
   a bottom surface, bonded to the resistive touch module by the optical adhesive.
Clause 7: The resistive touch panel of claim 6, wherein the decoration film has a decoration pattern formed on the bottom surface.
Clause 8: The resistive touch panel of claim 7, wherein the decoration pattern is formed by means of dip coating, gravure/relief coating, sputtering, thermal evaporation, chemical vapor deposition, screen printing, or pad printing.
Clause 9: The resistive touch panel of claim 7, wherein the decoration pattern is a color pattern.
Clause 10: The resistive touch panel of claim 6, wherein the top surface is transparent acrylics or material of epoxy resin.
Clause 11: The resistive touch panel of claim 6, wherein the base material is poly carbonate (PC), arton, polyether surlfone (PES), zeonor, tri-acetyl Cellulose (TAC), polyethylene terephthalate (PET), or polymethyl methacrylate (PMMA).
Clause 12: The resistive touch panel of claim 6, wherein the bottom surface is transparent acrylics or material of epoxy resin.
Clause 13: The resistive touch panel of claim 1, wherein the frame is an opaque material.

All combinations and sub-combinations of the above-described features also belong to the invention.

## Claims

1. . A flat-surface resistive touch panel (20), comprising:
a resistive touch module (26, 30, 50), installed in a frame (28), for detecting input signals of multiple touches; and **characterized by**:
a decoration film (21), fixed on the resistive touch module (20) with an optical adhesive (25), the decoration film (21) forming a flat surface with the frame (28).

2. . The resistive touch panel of claim 1, **characterized in that** the resistive touch module (30) comprises:
a first substrate (32), for detecting position of an input point in a first direction;
a conductive layer, formed on the first substrate (32), the conductive layer having a voltage difference (33) in the first direction;
a second substrate (36), for detecting position of the input point in a second direction;
a plurality of electrodes (37), formed on the second substrate (36), the plurality of the electrodes (37) being perpendicular to the second direction; and
a spacer layer (34), disposed between the first substrate (32) and the second substrate (36), for separating the conductive layer from the plurality of the electrodes (37).

3. . The resistive touch panel of claim 2, **characterized in that** the resistive touch module (30) further comprises:
a complex programmable logic device (CPLD) (42), for processing short-circuited voltage between the conductive layer and the plurality of the electrodes (37) for generating analog signals of the first direction and digital signals of the second direction;
an analog-to-digital converter (A/D) (46), for converting the analog signals of the first direction into digital signals of the first direction; and
a micro controller unit (MCU) (44), for generating coordinate values of the input point according to the digital signals of the first direction and the digital signals of the second direction.

4. . The resistive touch panel of claim 1, **characterized in that** the resistive touch module (50) comprises:
a first substrate (52), for detecting position of an input point in a first direction;
a plurality of first electrodes (51), formed on the first substrate (50), the plurality of the first electrodes (51) having a first voltage difference (53) in the first direction;
a second substrate (56), for detecting position of the input point in a second direction;
a plurality of second electrodes (55), formed on the second substrate (56), the plurality of the second electrodes (55) having a second voltage difference (57) in the second direction; and
a spacer layer (54), disposed between the first substrate (52) and the second substrate (56), for separating the plurality of the first electrodes (53) from the plurality of the second electrodes (57).

5. . The resistive touch panel of claim 4, **characterized in that** the resistive touch module (50) further comprises:
a complex programmable logic device (CPLD) (62), for processing short-circuited voltage between the plurality of the first electrodes (51) and the plurality of the second electrodes (55) for generating analog signals of the first direction and analog signals of the second direction;
an analog-to-digital converter (A/D) (64), for converting the analog signals of the first direction and the analog signals of the second direction into digital signals of the first direction and digital signals of the second direction; and
a micro controller unit (MCU) (64), for generating coordinate values of the input point according to the digital signals of the first direction and the digital signals of the second direction.

6. . The resistive touch panel of claim 1, **characterized in that** the decoration film (21) comprises:
a top surface (211), forming the flat surface with the frame (28);
a base material (212); and
a bottom surface (213), bonded to the resistive touch module (30) by the optical adhesive (26).

7. . The resistive touch panel of claim 6, **characterized in that** the decoration film (21) has a decoration pattern (24) formed on the bottom surface (213).

8. . The resistive touch panel of claim 7, **characterized in that** the decoration pattern (24) is formed by means of dip coating, gravure/relief coating, sputtering, thermal evaporation, chemical vapor deposition, screen printing, or pad printing.

9. . The resistive touch panel of claim 6, **characterized in that** the top surface (211) and the bottom surface (213) are made of transparent acrylics or material of epoxy resin.

10. . The resistive touch panel of claim 6, **characterized in that** the base material (212) is poly carbonate (PC), arton, polyether surlfone (PES), zeonor, tri-acetyl Cellulose (TAC), polyethylene terephthalate (PET), or polymethyl methacrylate (PMMA).
